# EUROPEAN PATENT APPLICATION

(11) **EP 1 710 357 A1**
(43) Date of publication of application: **11.10.2006**
(21) Application number: 05703573.5
(22) Date of filing: 14.01.2005
(51) Int. Cl.: E02F 9/08, B62D 55/10

(54) **MAIN FRAME OF CONSTRUCTION MACHINE AND METHOD OF PRODUCING THE SAME**

(30) Priority: 29.01.2004 US 766470
(71) Applicant: Komatsu Ltd, Minato-ku, Tokyo 107-8414 (JP)
(72) Inventor: FUKAZAWA, Kazumasa, Chattanooga, Tennessee 374010168 (US); ANDREWS, David, Chattanooga, Tennessee 374010168 (US); MUKAINO, Masayuki, Chattanooga, Tennessee 374010168 (US)
(74) Representative: Haley, Stephen
(86) International application number: PCT/JP2005/000334
(87) International publication number: WO 2005/073473

(57) **Abstract**

A main frame 2 used for a construction machine having a working machine, in which a traveling unit 3 is attached to a side extending along a posterior-anterior direction of the construction machine, and the working machine is attached to a front portion and/or rear portion of the construction machine includes a plurality of frame modules 21, 22, 23, 24 arranged in the posterior-anterior direction of the construction machine with respective end surfaces jointed to each other, in which the frame modules 22, 24 disposed at a position where a loading is applied among the plurality of frame modules 21, 22, 23, 24 are formed by integral casting.

## Description

### TECHNICAL FIELD

This invention relates to a structure of a main frame for construction machines, and a method of manufacturing the same.

### BACKGROUND ART

In general, a construction machine is basically formed by providing a longitudinally elongated, upper coverless, substantially box type main frame in a central portion of a vehicle, attaching traveling units to left and right sides of the main frame, attaching a working machine to a front portion and/or a rear portion of the main frame, and further providing an engine and a power component such as a transmission, a hydraulic pump and the like in an inner space of the main frame.
As known well, in a construction machine, the power of a working machine can be displayed owing to the longitudinal and lateral stability obtained by straddle of the traveling units attached to the construction machine and traction obtained by the traveling units, as well as receiving a reaction force from the working machine.

As a result, a large external force acts on the main frame by both the traveling units and working machine, so that the main frame requires a strength high enough to withstand the external force, while requiring that an inner space capable of holding an engine and power components therein be secured on the inner side thereof. It has been required to developing a structure of a main frame meeting both of these requirements.

Various kinds of structures of main frame have been devised for the purpose of achieving the requirements. Patent Literature 1 discloses as a first example a structure for improving the strength of portions to which traveling units are attached in a main frame of a bulldozer. Patent Literature 2 discloses as a second example a structure for improving the strength of a portion to which a working machine is attached in a main frame of a bulldozer as an example.

First and second examples of a related art main frame of a construction machine will now be described in detail with reference to Figs. 6 to 8 by taking as examples the structures disclosed in the above Patent Literature 1 and Patent Literature 2.

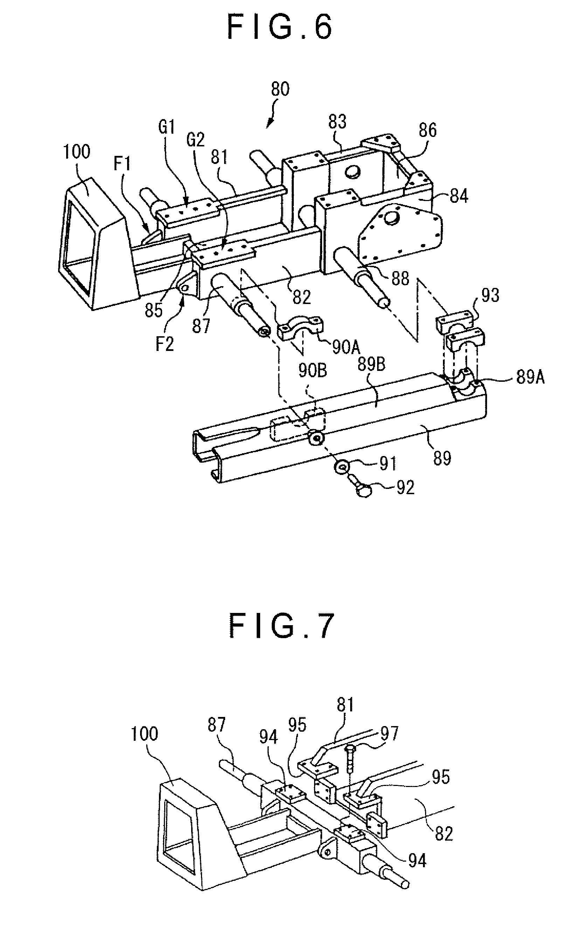

First, the first example of the related art structure of a main frame for a construction machines will be described with reference to Figs. 6 and 7.
Figs. 6 and 7 are perspective views each showing the first example of the related art main frame for construction machines, where Fig. 6 is a drawing describing a basic shape and Fig 7 is a drawing describing an applied shape.
Referring to Fig. 6, a main frame 80 includes side plates 81, 82, 83, 84 extending in posterior-anterior direction as a traveling direction of the construction machine, a bottom plate 85, a rear plate 86, and one front cross bar 87 and one rear cross bar 88.

The cross bar 87 penetrates through the front side plates 81, 82 and projects in an out-of plane direction of the side plates 81, 82, and a front portion of the track frame 89 is coupled to a tip end of the cross bar 87. More specifically, a halved cap 90A is provided on a central portion of a portion projected from the side plates 81, 82 of the cross bar 87, the halved cap 90A being engaged with a halved cap 90B provided to the track frame 89. The cross bar 87 penetrates through the inside of the track frame 89, and the tip end of the cross bar 87 is coupled to the track frame 89 with a bolt 92 with a plate 91 interposed therebetween.

The rear cross bar 88 penetrates through the rear side plates 83, 84 and projects in an out-of-plane direction of the side plates 83, 84, and a rear portion of the track frame 89 is coupled to a tip end of the cross bar 88. More specifically, a tip end of the cross bar 88 is inserted into a stepped portion 89A formed on an upper rear end of the track frame 89, where the cross bar 88 is attached with a cap 93 from the upper side thereof.
Provided at front ends of the front side plates 81, 82 are brackets F1, F2, to which a working machine (not shown) is fixed. Provided on upper sides of the side plates 81, 82 are brackets G1, G2, to which cylinders (not shown) for vertically swinging the working machine are fixed.
Referring then to Fig. 7, a radiator guard 100 is cut off from the front side plates 81, 82 and connected to the front cross bar 87, and the radiator guard 100 is integrated by combining plates 94 provided to the front cross bar 87 and plates 95 provided to the front side plates 81, 82 together by bolts 96.

By employing such arrangement of the first example, the track frame 89 is combined with the main frame 80 via the cross bars 87, 88 so that the track frame 89 can be combined with the main frame 80 with a cover 89B integrated with the track frame 89, resulting in facilitating discharge of the earth and sand collected on the track frame 89. Further, the stress concentration in and around the cross bars 87, 88 is alleviated owing to the combined portions formed by circular-sectioned cross bars 87, 88.

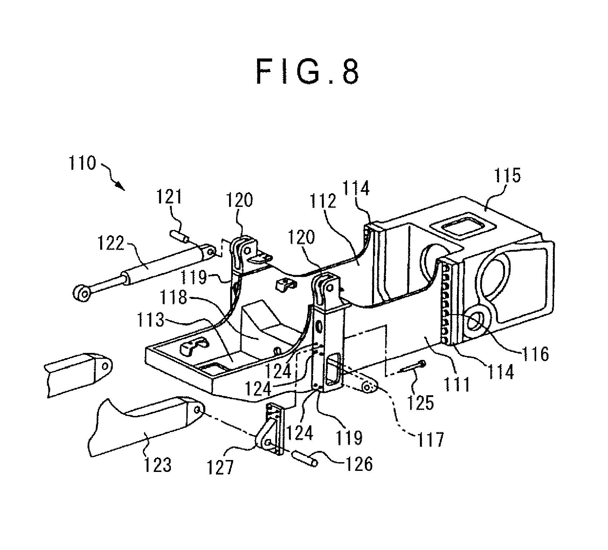

Referring then to Fig. 8, the second example of the related art main frame structure for the construction machine will be described.
Fig. 8 is a perspective view showing the second example of the related art main frame structure for the construction machine.
Referring to Fig. 8, a main frame 110 includes: a pair of left and right frames 111, 112. each of which is made of one straight plate; and a bottom plate 113 combining lower end portions of the frames 111 *(Translator's comment: correctly, these frames 111, 112).* Flanges 114 are welded to rear end portions of the frames 111, 112, the flanges 114 fastened and fixed to a front surface of a steering case 115 by bolts 116.

On substantially central portions in the posterior-anterior direction of the frames 111, 112, an equalizer bar 117 by which track frames of left and right traveling units (not shown) are connected together is swingably supported. Further, a cross member 118 combining the left and right frames 111, 112 together is welded to a portion on which the equalizer 117 is provided.
Hollow columnar members 119 are welded in a vertically extending state to outer side surfaces of the frames 111, 112 corresponding to the position of the cross member 118. A lift cylinder support member 120 is welded to an upper portion of the hollow columnar members 119, and one end of a lift cylinder 122 is swingably attached to the lift cylinder support member 120, the lift cylinder 122 adapted to vertically swing a working machine 123.
A plurality of through holes 124 are formed in front surfaces of lower portions of the hollow columnar members 119, into which bolts 125 are inserted to fasten and fix a working machine support members 127 adapted to support the working machine 123 via pins 126

An external force acting on the main frame 110 by the working machine 123 and lift cylinder 122 in the structure of Fig. 8 is first transmitted in the form of low stress by the hollow columnar members 119 to the cross member 118, left and right frames 111, 112 and bottom plate 113. This enables each of the left and right frames 111, 112 to be made of one straight plate and the main frame structure to be simplified and weight-reduced.

[Patent Literature 1] JP 6-49284U, pages 8 to 10, Fig. 1, Fig. 4
[Patent Literature 2] Japanese Patent No. 2978894, pages 4 to 6, Fig. 1

### DISCLOSURE OF THE INVENTION

### PROBLEMS TO BE SOLVED BY THE INVENTION

However, the structures of the first and second examples of the related art main frame structure for a construction machine shown in Figs. 6 to 8 have the following problems.
(1) In the main frames 80, 110, many welded structures are used at portions thereof to which the working machine and cylinders for vertically swinging the working machine are attached and at neighboring portions thereof. Namely, welded structures are used at the brackets F1, F2, G1, G2 in the main frame 80 (Fig. 6). Further, welded structures are used at the portions to which the lift cylinder support members 120 are attached, at the hollow columnar members 119 themselves, and at portions of the hollow columnar members 119 which are attached to the main frame 110 in the main frame 110 (Fig. 8).
As a result, stress concentration is generated at above-described welded portions by an external force when the external force applied by the working machine and cylinders for vertically swinging the working machine is transmitted to the side plates 81, 82, 83, 84 (Figs. 6) in the first example, and when the external force applied by the working machine 123 and the cylinder 122 is transmitted to the frames 111, 112 (Fig. 8) in the second examples.

(2) Both of the main frames 80 (Fig. 6) of the first example and the main frame 110 (Fig. 8) of the second example are long and have complicated shapes, so that a large-sized welding jig and a large-sized machine tool are needed to secure predetermined levels of form accuracy and dimensional accuracy of the main frames 80, 110. This causes the manufacturing cost to increase.
(3) A part of each of the main frames 80, 110 sometimes employs division-assembly system for facilitating manufacturing. For instance, the radiator guard 100 in the main frame 80 (Fig. 7) is divided in the first example and the steering case 115 in the main frame 110 (Fig. 8) is divided in the second example. However, the separated elements still have large sizes. Moreover, since the parts are divided into elements, it becomes necessary to machine assembling portions thereof. As a result, it becomes difficult to reduce the manufacturing cost.

An object of the present invention is to provide: a main frame used for a construction machine having a working machine, in which a traveling unit is attached to a side of the construction machine in a posterior-anterior direction and the working machine is attached to a front portion and/or rear portion of the construction machine, the main frame capable of preventing generation of stress concentration and realizing high durability thereby; and a manufacturing method of the main frame for the construction machine providing a simple manufacturing and a low manufacturing cost.

### MEANS FOR SOLVING THE PROBLEMS

A main frame used for a construction machine having a working machine according to a first aspect of the invention, in which a traveling unit is attached to a side extending along a posterior-anterior direction of the construction machine and the working machine is attached to a front portion and/or a rear portion of the construction machine, includes: a plurality of frame modules arranged in the posterior-anterior direction of the construction machine with respective end surfaces thereof being jointed to each other, in which the plurality of frame modules include a predetermined frame module disposed at a position where a loading is applied, the predetermined frame module being formed by an integral casting.

In the main frame of the construction machine according to a second aspect of the invention, in the first aspect of the invention, the frame module disposed at the position where the loading is applied is a frame module of a portion to which the traveling unit is attached and/or a frame module of a portion to which the working machine is attached.

In the main frame of the construction machine according to a third aspect of the invention, in the first or second aspect of the invention, frame modules other than the cast frame module are prepared in advance with plural variations of lengths in the posterior-anterior direction, and the main frame is formed by combining a frame module selected from the plural variations and the cast frame module.

In the main frame of the construction machine according to a fourth aspect of the invention, in the third aspect of the invention, each of the frame modules prepared in advance with plural variations are formed by sheet metal working.

A manufacturing method of a main frame used for a construction machine having a working machine according to a fifth aspect of the invention, in which a traveling unit is attached to a side extending along a posterior-anterior direction of the construction machine and the working machine is attached to a front portion and/or a rear portion, includes the steps of: integrally molding by casting a frame module disposed at a position where a loading is applied, the frame module being included in a plurality of frame modules included in the main frame and arranged in the posterior-anterior direction of the construction machine; and jointing end surfaces of the integrally formed frame module and other completed frame module to form a completed product.

In the manufacturing method of the main frame of the construction machine according to a sixth aspect of the invention, in the fifth aspect of the invention, the step for forming the completed product includes a step of selecting a frame module from frame modules prepared in advance with plural variations as the other completed frame module.

### EFFECT OF THE INVENTION

According to the first and second aspects of the invention, by forming the frame modules disposed at a position where a loading is applied by the working machine and the traveling unit attached thereto as an integral casting, for example, the portions at which the traveling units are attached and portions at which the working machine and cylinders for the working machine are attached in a front portion of the main frame can be integrated and formed into a unitary casting frame module, and the portions to which the traveling units are attached and the portions to which the working machine is attached in a rear portion of the main frame can be integrated and formed into a unitary casting module. Thus, an external force applied by the traveling units and working machine to the main frame is dispersed in the unitary casting module, and transmitted to the main frame as a whole. Therefore, since stress concentration does not occur, by forming the other portions of the main frame into a sheeted module and combining these modules to form a main frame, a main frame having a high durability can be obtained.

According to the third aspect of the invention, the following advantage and effects can be obtained in addition to those of the first and second aspects of the invention.
(1) The main frame is formed by changing at least one of the modules constituting the main frame to a module of different specifications. Thus, a main frame of different specifications can be obtained easily.

(2) The results of (1) above show that a group of construction machines of, for example, identical basic specifications (which will hereinafter be referred to as a vehicle class) may have a main frame of a substantially equal strength. Therefore, it becomes possible to use each of the modules of the main frames of various specifications in common in a group of construction machines of an equal vehicle class. This enables the manufacturing cost to be reduced.
(3) The results of (1) show that a main frame of special specifications in little demand can also be obtained easily and inexpensively by replacing only a certain module with a module of special specifications in the same manner.

According to the fourth aspect of the invention, by forming the plurality of frame modules having been prepared in advance by sheet metal working, the plurality of frame modules can be formed easily, so that the manufacturing cost can further be reduced and the main frame can easily applied to variety of specifications.

According to the fifth aspect of the invention, when required machining work is carried out for each of comparatively small modules separately, it becomes possible to use a regular machining tool of a high versatility. Moreover, it becomes possible to carry out the handling and setting of each module easily and speedily during the machine work. This enables a main frame of a greatly reduced manufacturing cost to be obtained.

According to the sixth aspect of the invention, the following advantages and effects can be obtained in addition to those of the fifth aspect of the invention.
(1) It becomes possible to use in common each of the modules of the main frames of various specifications in, for example, a group of construction machines of an equal vehicle class, and, moreover, store temporarily such modules in a separate machining completed state.
(2) Owing to the results of (1) above, it becomes possible to manufacture ordered main frames of various specifications in the shortest period of time, and thereby reduce the term of manufacturing the main frames.

(3) Owing to the effects described in (1) and (2) above, it becomes possible to control the quantity of production of each module and the quantity of stock thereof, and this enables the quantity of preparation of each module to be minimized.
(4) Owing to the results of (3) above, it becomes possible to further reduce the main frame manufacturing cost.
(5) The main frames of special specifications in little demand can also be obtained speedily and inexpensively by replacing a certain module only with a module of special specifications.

Owing to these effects, it becomes possible to provide a main frame for a construction machine which does not encounter the occurrence of stress concentration, so that a high durability is attained; and a manufacturing method of the main frame which enables main frames to be manufactured easily with a low manufacturing cost.

### BRIEF DESCRIPTION OF DRAWINGS

Fig. 1 is a side view of a construction machine according to a first embodiment of the present invention;
Fig. 2 shows a side view and an elevated perspective view showing the structure of a main frame of the embodiment;
Fig. 3 shows a side view and an elevated perspective view showing the structure of a main frame included in a construction machine according to a second embodiment of the present invention;
Fig. 4 shows a side view and an elevated perspective view showing the structure of a main frame included in a construction machine according to a third embodiment of the present invention;

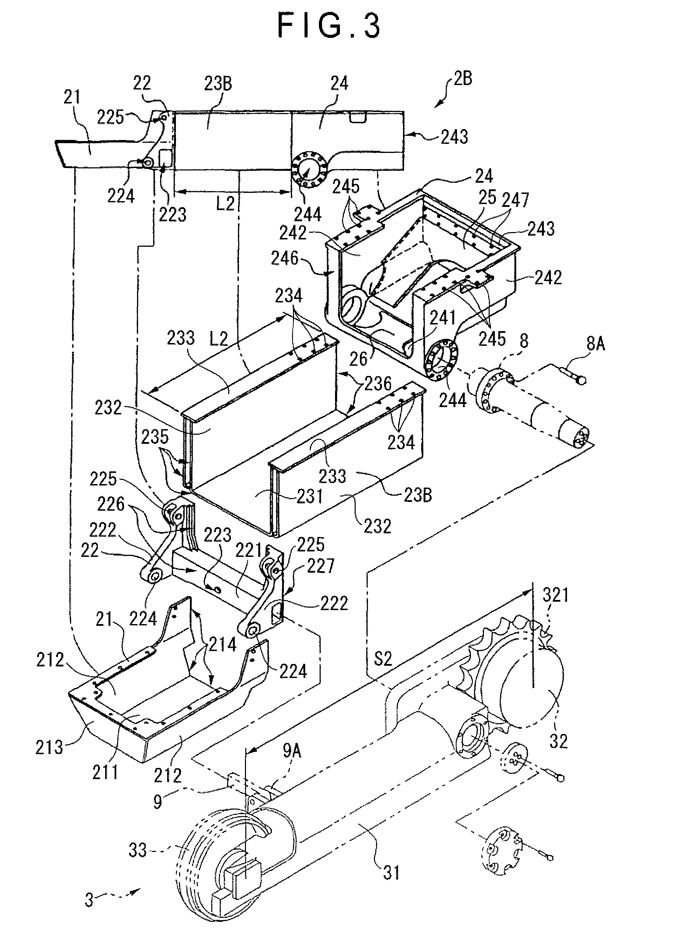

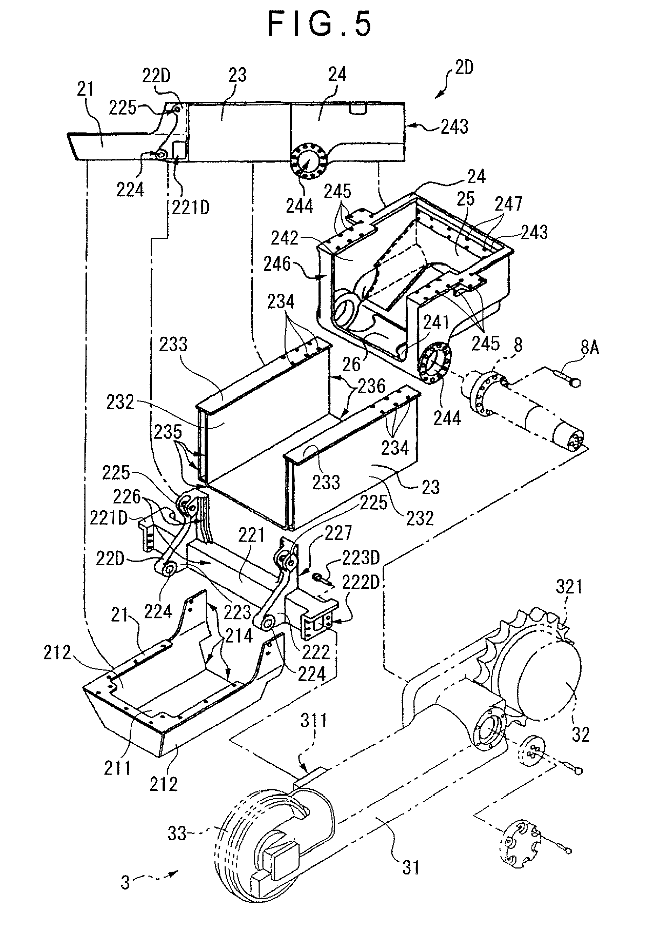

Fig. 3 *(Translator's comment: Fig 5)* shows a side view and an elevated perspective view showing the structure of a main frame included in a construction machine according to a fourth embodiment of the present invention;
Fig. 6 is a perspective view showing the structure of a main frame included in a construction machine of a related art;
Fig. 7 is a perspective view of a main part of the main frame of the related art; and
Fig. 8 is a perspective view showing the structure of a main frame of another related art.

### EXPLANATION OF CODES

- 1:: bulldozer (construction machine)
- 2, 2B, 2C, 2D:: main frame
- 3:: traveling unit
- 4:: front working machine
- 5:: rear working machine
- 21, 22, 22D, 23, 23B, 24, 24C:: frame module

### BEST MODE FOR CARRYING OUT THE INVENTION

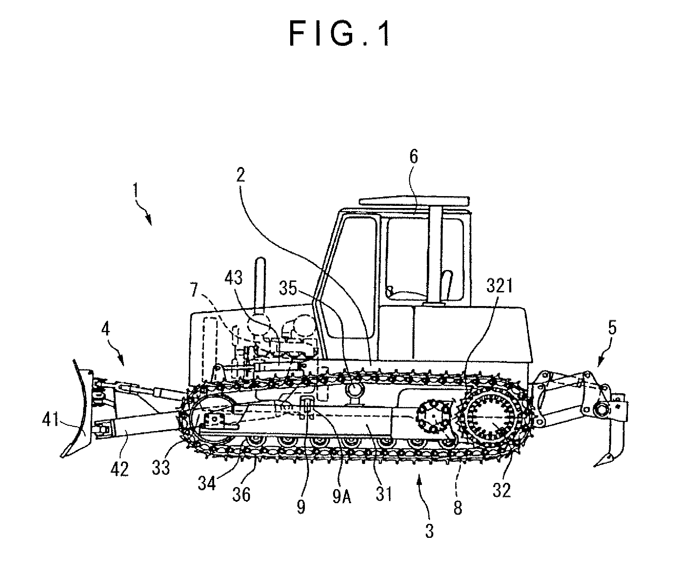

First to fourth embodiments of structures and manufacturing methods of a main frame according to the present invention will be described below with a bulldozer taken as an example with reference to Figs. 1 to 5.

### [1] First Embodiment

### (1-1) Entire Structure

Fig 1 shows a bulldozer 1 as a construction machine employing a main frame according to a first embodiment of the present invention.
In Fig. 1, the bulldozer 1 includes a main frame 2, a traveling unit 3, a front working machine 4, a rear working machine 5, an operation room 6, and an engine 7.

The main frame 2 is a support means for a vehicle body including the operation room 6, the engine 7 and a hydraulic pump (not shown) mounted thereon. Although described later in detail, the main frame 2 is formed by jointing a plurality of frame modules, and a pivot shaft 8 and an equalizer bar 9 are provided on lateral sides of the main frame 2.
The pivot shaft 8 projects in an out-of-plane direction from left and right sides on rear portions of the main frame 2, and swingably supports the traveling unit 3 relative to the main frame 2.
The equalizer bar 9 is a member for connecting the traveling units 3 provided on both lateral sides of the main frame 2, both ends of the equalizer bar 9 supporting track frames 31 included in the traveling units 3 via brackets 9A. A front portion of the main frame 2 is installed over a substantially central portion of the equalizer bar 9, so that the equalizer bar 9 serves as an absorbing means for absorbing vertical movement of the traveling units 3 and absorbing vertical movement of the main frame 2.

The traveling units 3 are provided on the both lateral sides of the main frame 2 for moving the bulldozer 1 in a posterior-anterior direction, the traveling units 3 each including the track frame 31, a final reduction gear 32, an idler 33, track rollers 34, a carrier roller 35 and a crawler 36.
The track frame 31 is a steel body extending in the posterior-anterior direction along the main frame 2. Although not shown, a hydraulic motor as a driving source is provided inside a rear end of the track frame 31, and the final reduction gear 32 is provided outside the rear end of the track frame 31.
The final reduction gear 32 is provided on an outer side of the rear portion of the track frame 31 with a sprocket 321 provided on the outer circumference thereof. Although not shown, the sprocket 321 on the outer circumference rotates as rotation of the hydraulic motor provided on an inner side of the track frame 31.

The idler 33 is rotatably provided on the track frame 31 and is an idler wheel for guiding the crawler 36 that is wound around the idler 33 and the sprocket 32 *(Translator's comment: sprocket 321).*
The plurality of track rollers 34 are rotatably provided on a lower side of the track frame 31 and arranged in the posterior-anterior direction. The track rollers 34 support the track frame 31, while guiding the crawler 36 during traveling.
The carrier roller 35 is rotatably provided on an upper side of the track frame 31 for supporting lower surface of the crawler 36 located on the upper side.
The crawler 36 is constituted by connecting a plurality of shoe plates with pins, which is wound around the sprocket 321, the idler 33, the track roller 34 and the carrier roller 35 and engaged with the sprocket 321, the crawler 36 moving on the rollers in accordance with rotation of the sprocket 321, so that the bulldozer 1 travels.

The front working machine 4 is a blade used for operations such as banking and ground leveling by moving the bulldozer 1, which includes a bulldozing blade 41, a frame 42 and a lift cylinder 43.
The bulldozing blade 41 is made of a curved steel plate and supported rotatably at a tip end of the frame 42.
A base end of the frame 42 is supported by the main frame 2 in such manner swingable in the vertical direction for transmitting a force acting on the bulldozing plate 41 to the main frame 2.
A tip end of the lift cylinder 43 is connected to a central portion of the frame 42 while a base end thereof is swingably supported by the main frame 2, the lift cylinder 43 extending and contracting when receiving pressure oil from the hydraulic pump (not shown) to swing the frame 42 in the vertical direction.

The rear working machine 5 is a ripper used for underground evacuation and rock breaking, a base end thereof supported by the main frame 2 in such manner swingable in the vertical direction and having a link mechanism. The link mechanism is connected to a hydraulic cylinder, where extension and contraction of the hydraulic cylinder moves the ripper at the tip end in the vertical direction via the link mechanism to perform operations such as rock breaking.

### (1-2) Structure of Main Frame

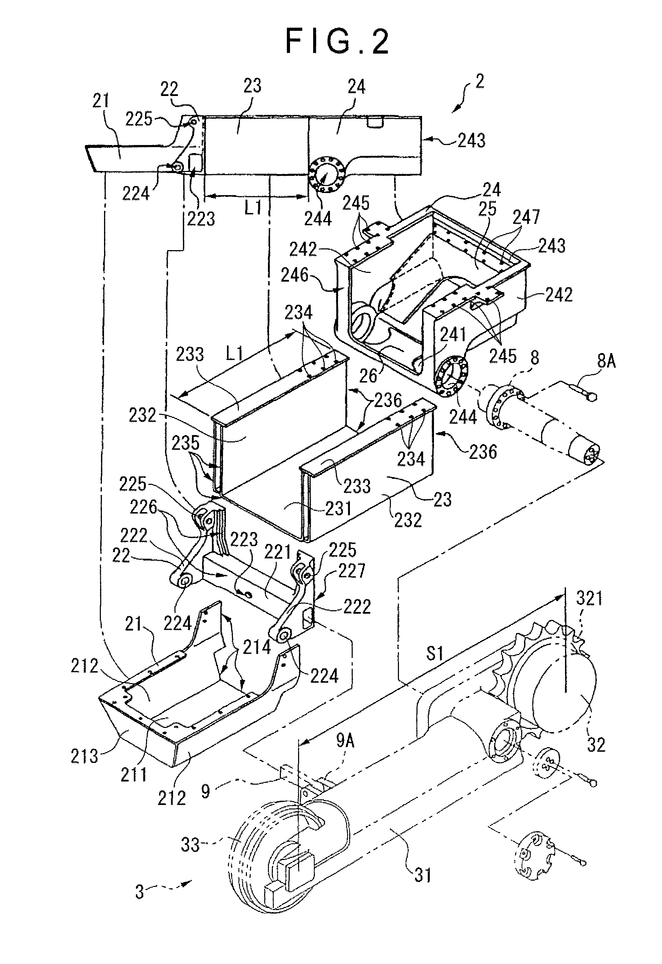

The main frame 2 is constituted by combining a plurality of frame modules, and includes a first module 21, a second module 22, a third module 23 and a fourth module 24 as shown in Fig. 2
The first module 21 has a shape like ship bottom with a substantially U-shaped cross section, which includes a bottom side 211, lateral sides 212 and a front side 213, in which end surfaces on the rear sides of the bottom side 211 and lateral sides 212 form a welded surface 214.
The first module 21 is formed by sheet metal processing, on which power sources such as the engine 7 is mounted.

The second module 22 is a frame member integrally formed by casting, which includes a tubular portion 221 extending in a width direction of the main frame 2 and collar-shaped portions 222 provided on both ends of the tubular portion 221.
The tubular portion 221 is an angulated tubular member with its both ends opened, which has a hole 223 formed substantially at the center in the extending direction. The equalizer bar 9 is inserted into the tubular portion 221, combined with the tubular portion 221 at the hole 223 with a pin, and thereby the main frame 2 can be positioned over the equalizer bar 9.

The collar-shaped portion 222 has lateral sides having substantially triangle shape widening toward upper side and front side from openings on the both ends of the tubular portion 221, the collar-shaped portion 222 having a hole 224 on the front end and a hole 225 on the upper end.
The hole 224 on the front end is swingably connected to the base end of the frame 42 included in the front working machine 4. On the other hand, the hole 225 on the upper end is swingably connected to the base end of the lift cylinder 43 included in the front working machine 4.
A front end surface of the tubular portion 221 is formed to be flat, and ribs are formed on connections between the tubular portion 221 and upper portions of the collar-shaped portions 222, the ribs being welded surfaces 226 for the first module 21.
A rear end surface of the tubular portion 221 and rear end surfaces of the collar-shaped portions 222 are also formed to be flat, which are welded surfaces 227 for the third module 23 (described later).

The third module 23 is formed to be box-shaped with its both ends and top side opened by sheet metal working, which include a bottom side 231, lateral sides 232, and upper portions 233. The bottom side 231 is a single plate, on which the hydraulic pump or the like that is driven by the engine 7 is mounted. The lateral sides 232 each are a double-plate formed in upright state from each edge in a width direction of the bottom side 231. The upper portions 233 each are a belt-shaped plate straddling upper edges of the double-plate of the lateral side 232, a rear portion of which has a plurality of holes 234 to which a front portion of the operation room 6 is jointed by fastening means such as bolts via mounts or the like.
In the third module 23 as described above, front end surfaces of the bottom side 231 and the lateral sides 232 are welded surfaces 235 for the second module 22, while the rear end surfaces are welded surfaces 236 for the fourth module 24.

As with the second module 22, the fourth module 24 is a frame member integrally formed by casting, which is a box-shaped member having a bottom side 241, lateral sides 242 and a rear side 243, the fourth module 24 having reinforcing plates 25, 26 inside.
Formed on front side of connection between the bottom side 241 and the lateral sides 242 are bases 244 each having a plurality of screw holes formed around a through hole, to which the pivot shaft 8 is screwed and fixed by bolts 8A.
A plurality of holes 245 are formed on front portions on upper end surfaces of the lateral sides 242, to which a rear portion of the operation room 6 is jointed by a fastening means such as bolt via a mount.
Front end surfaces of the bottom side 241 and the lateral sides 242 are formed to be wide and projecting inwardly, the end surfaces being welded surfaces 246 for the third frame.
A plurality of holes 247 are formed on an inner side of the rear side 243, where the above-described link mechanism of the rear working machine 5 and the base end of the hydraulic cylinder are rotatably connected to the plurality of holes 247.

### (1-3) Manufacturing Method of Main Frame 2

The following procedures will be taken to manufacture the main frame 2 with the above-described structure.
(1) The second module 22 and the fourth module 24 are prepared in advance by casting.
(2) The first module 21 and the third module 23 are prepared in advance by sheet metal working. It is to be noted that a length L1 of the third module 23 in posterior-anterior direction is determined in accordance with a ground contact length S1 between the idler 33 and the sprocket 321 of the bulldozer 1 to be manufactured.
(3) The welded surface 214 of the first module 21 and the front side welded surface 226 of the second module 22, the rear side welded surface 227 of the second module 22 and the front side welded surface 235 of the third module 23, and the rear side welded surface 236 of the third module 23 and the welded surface 246 of the fourth module 24 are respectively jointed by welding, so that the modules 21 to 24 are combined with each other to complete the main frame 2.

### (1-4) Effect and Advantage of First Embodiment

In the main frame 2 having the structure described above, an external force generated at each portion after the bulldozer 1 is completed acts on the main frame 2 as follows.
When the bulldozer 1 is driven forward for operations such as banking and ground leveling, the external force acting on the bulldozing blade 41 of the front working machine 4 acts on the hole 224 of the second module 22 as a bearing portion of the bulldozing blade 41 via the frame 42, which is then transmitted to the second module 22.
When the bulldozing blade 41 of the front working machine 4 is moved up and down by the lift cylinder 43, the force acts on the hole 225 connected to the base end of the lift cylinder 43, which is transmitted to the second module 22.
During travel of the bulldozer 1, the force acting on the equalizer bar 9 caused by the up-and-down motion of the traveling unit 3 acts on the hole 223 formed on the tubular portion 221 of the second module 22, which is transmitted to the second module 22.

During travel, the external force acting on the traveling unit 3 caused by up-and-down motion or the like acts on the base 244 of the fourth module 24 via the pivot shaft 8 on the rear side, which is transmitted to the fourth module 24.
The reaction force caused by rock breaking or the like in driving the rear working machine 5 acts on the rear side 243 of the fourth module 24 supporting the rear working machine 5, which is transmitted to the fourth module 24.
Meanwhile, the first module 21 and the third module 23 farmed by sheet metal working receive static loading from the engine 7, the hydraulic pump, etc., the static loading being a dead weight of the bulldozer 1.

Thus, it is so arranged that force acting points 223, 224, 225 of the external force acting on the front side of the main frame 2 are concentrated on the second module 22 of integral casting so as to disperse the force thereinside, and that the force acting points 243, 244 acting on the rear side of the main frame 2 are concentrated on the fourth module 24 so as to disperse the force thereinside to transmit the force to the whole part of the main frame 2, so that the stress concentration can be eliminated. As a result, an arrangement having a main frame with high durability can be realized.

In the above manufacturing method shown in Figs. 1 and 2, by performing machining by relatively small unit of each module 21 to 24, machining can be performed with an ordinary machine tool with high versatility, and further, handling and setting in machining can be performed easily and quickly, so that the manufacturing cost can be greatly reduced.

### [2] Second Embodiment

Next, a second embodiment of the present invention will be described. Incidentally, in the following description, the same reference numeral will be attached to the same components as the above to omit the description thereof.
Fig 3 shows a main frame 2B according to a second embodiment of the present invention. The main frame 2B is used for a bulldozer having a ground contact length S2 between the idler 33 and the sprocket 321 longer than the ground contact length S1 in the first embodiment, and thus the length of the main frame 2B is also larger.
Thus, structures of the first module 21, second module 22 and fourth module 24 are the same as those in the first embodiment, but a length L2 of a third module 23B is set to be larger than the length L1 of the third module 23 in the first embodiment. The third module 23B in the second embodiment is different from the third module 23 in the first embodiment only in its length, and sectional shape, plate structure and the like are the same as those of the third module 23.

With the third module 23B described above, since a position of the equalizer bar 9 (223) also moves forward, a projection length of the track frame 31 on the front side from the equalizer bar 9 does not increase, restraining increase of a loading moment of the track frame 31.
Further, the main frame 2B can be manufactured by the manufacturing method similar to that in the first embodiment.

### [3] Third Embodiment

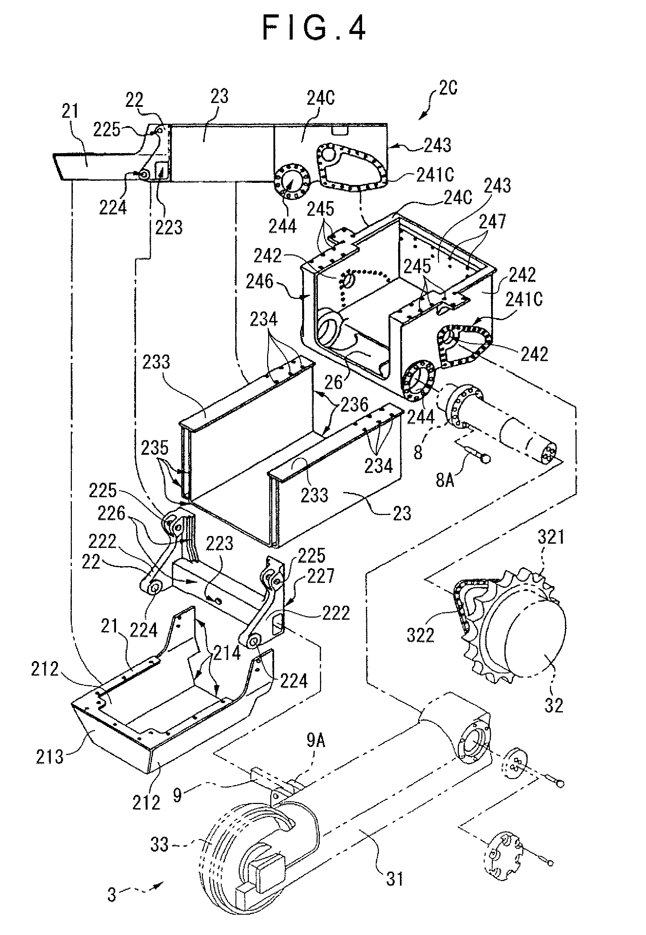

Next, a third embodiment of the present invention will be described.
In the first embodiment described above, the final reduction gear 32 is provided on the outer surface of the track frame 31.
On the other hand, the third embodiment differs in a point that the final reduction gear 32 is provided to an outer surface of a fourth module 24C included in a main frame 2C as shown in Fig. 4.
A base 241C for a joint portion 322 of the final reduction gear 32 to be jointed is provided on a rear portion of the lateral side 242 of the fourth module 24C.
The hydraulic motor is housed in the fourth module 24C, and holes 242C for output shafts of the hydraulic motor to be projected therefrom are formed on the lateral sides 242.

In such main frame 2C, the fourth module 24C receives the reaction force caused by rotary drive of the sprocket 321 in addition to the external force acting via the pivot shaft 8 and the one acting on the rear working machine, and disperses the forces thereinside to transmit to the whole part of the main frame 2C.
The main frame 2C can be manufactured by the procedures of the first embodiment described above.

### [4] Fourth Embodiment

Next, a fourth embodiment of the present invention will be described.
In the first embodiment described above, the front portion of the traveling unit 3 is provided with the equalizer bar 9, and the main frame 2 is swingably installed on the substantially central portion of the equalizer bar 9.
On the other hand, the fourth embodiment differs in a point that a main frame 2D is rigidly jointed to the track frame 31 of the traveling unit 3 on the front portion as shown in Fig. 5.
Thus, in the main frame 2D according to the fourth embodiment, a specification of a second module 22D is different from that in the first embodiment as shown in Fig. 5.
The second module 22D includes a base 221D provided on an outer side of the collar-shaped portion 222 in the width direction in addition to the tubular portion 221 and the collar-shaped portion 222 similar to those in the first embodiment, but does not include a hole substantially at the center of the tubular portion 221 unlike the first embodiment.

The base 221D projects along the extending direction of the tubular portion 221, where a seat surface 222D with a plurality of screw holes formed thereon is formed on the tip end thereof.
An attachment surface 311 formed on a front inner side of the track frame 31 abuts on the seat surface 222D, so that the track frame 31 and the main frame 2D are rigidly combined with a fastening means such as a bolt 223D.
The main frame 2D can be manufactured by the procedures of the first embodiment described above.

### [5] Effects of Second to Fourth Embodiments

The following advantages and effects in addition to those of the structure of the first embodiment (Fig. 2) can be obtained in the above-described structures of the second embodiment to the fourth embodiment shown in Figs. 3 to 5.
(1) The main frames 2B, 2C, 2D of different specifications can be formed by only replacing an arbitrary module out of such modules 21 to 24 constituting the main frame 2 (Fig. 2) in the first embodiment with modules 23B, 24C, 22D of different specifications.

(2) The results of (1) above show that a group of construction machines of, for example, an equal vehicle class may have a main frame of a substantially equal strength. Therefore, the main frames of various specifications can be standardized for each module in a group of construction machines of an equal vehicle class. This enables the cost of manufacturing the main frame to be reduced.
(3) The results of (1) show that a main frame of special specifications in little demand can also be obtained easily and inexpensively by replacing only a certain module with a module of special specifications in the same manner.

The methods of manufacturing main frame structures in the second embodiment to the fourth embodiment described with reference to Figs. 3 to 5 can obtain the following advantage and effects in addition to those of the method in the first embodiment (Fig. 2).
(1) It becomes possible to standardize the main frames 2, 2B, 2C, 2D of various specifications for each module in, for example, a group of construction machines of an equal vehicle class, and, moreover, store temporarily each of the modules in a separate machining completed state.
(2) Owing to the results of (1) above, it becomes possible to manufacture ordered main frames 2, 2B, 2C, 2D of various specifications in the shortest period of time, and thereby reduce the lead time.

(3) Owing to the effects described in (1) and (2) above, it becomes possible to control the quantity of production of each module and the quantity of stock thereof, and this enables the quantity of the half-completed modules to be minimized.
(4) Owing to the result of (3) above, it becomes possible to further reduce the manufacturing cost of the main frame.
(5) The main frames of special specifications in little demand can also be obtained speedily and inexpensively by replacing only a certain module with a module of special specifications.

Consequently, the invention can provide a main frame structure for construction machines having a main frame provided in a central portion in the posterior-anterior direction of a vehicle thereof, traveling units attached to the left and right sides of the main frame, and a working machine attached to a front portion and/or a rear portion of the main frame, in which stress concentration does not occur and thereby a high durability is attained; and a method of manufacturing the main frame structure for construction machines, the method allowing the main frame structures to be manufactured easily with a low manufacturing cost.

### [6] Modification of Embodiment

Incidentally, the present invention is not limited to the embodiments described above, but includes modifications as described below.
In the manufacturing methods in the first embodiment to the fourth embodiment (Figs. 2 to 5), all the main frames 2, 2B, 2C, 2D are manufactured by completing the machine work for each of the modules 21, 22, 22D, 23, 23B, 24, 24C which constitute these main frames, and thereafter combining together required modules among these modules. The present invention is not limited thereto.
The main frames may also be manufactured by combining required modules together without carrying out the whole or a part of machine work needed therefor, and thereafter subjecting the combined modules to the machine work to obtain the main frames 2, 2B, 2C, 2D. In such a case, when the combining of an arbitrary number of modules is completed, arbitrary portions of the modules may be subjected to machine work.

In the above-described structures in the first to fourth embodiments (Figs. 2 to Fig. 5), another member such as a reinforcing member and/or a screw hole-carrying seat plate (each not shown) may be fixed by welding to the unitary casting modules 22, 22D, 24, 24C in the same manner as the reinforcing members 25, 26 shown as examples in the module 24.

The above is a description of the embodiment of the main frame structure for construction machines and a method of manufacturing the main frame according to the present invention with a bulldozer taken as an example, but the construction machine to which the main frame is applied is not limited to a bulldozer. The main frame can be used in practice universally in the same manner as in the above-described embodiments in other construction machines, and the same advantages and effects as in the above-described embodiments can be obtained.
Specific shapes and structures of the present invention may be designed in any manner as long as an object of the present invention can be achieved.

### INDUSTRIAL APPLICABILITY

The present invention can be applied to main frames for construction machines such as a hydraulic excavator, a wheel loader, etc. as well as a main frame of a bulldozer.

## Claims

1. A main frame used for a construction machine having a working machine, the construction machine having a traveling unit attached to a side extending along a posterior-anterior direction of the construction machine and the working machine attached to a front portion and/or a rear portion of the construction machine, the main frame comprising:
a plurality of frame modules arranged in the posterior-anterior direction of the construction machine with respective end surfaces thereof being jointed to each other, wherein
the plurality of frame modules include a predetermined frame module disposed at a position where a loading is applied, the predetermined frame module being formed by an integral casting.

2. The main frame of the construction machine according to claim 1, wherein
the frame module disposed at the position where the loading is applied is a frame module of a portion to which the traveling unit is attached and/or a frame module of a portion to which the working machine is attached.

3. The main frame of the construction machine according to claim 1 or 2, wherein
a frame module other than the cast frame module is prepared in advance with plural variations of lengths in the posterior-anterior direction, and
the main frame is formed by combining a frame module selected from the plural variations and the cast frame module.

4. The main frame of the construction machine according to claim 3, wherein
each of the frame modules prepared in advance with the plural variations is formed by sheet metal working.

5. A manufacturing method of a main frame used for a construction machine having a working machine, the construction machine having a traveling unit attached to a side extending along a posterior-anterior direction of the construction machine and the working machine attached to a front portion and/or a rear portion, the manufacturing method comprising the steps of:
integrally molding, by casting, a frame module disposed at a position where a loading is applied, the frame module being included in a plurality of frame modules included in the main frame and arranged in the posterior-anterior direction of the construction machine; and
jointing end surfaces of the integrally formed frame module and other completed frame module to form a completed product.

6. The manufacturing method of the main frame of the construction machine according to claim 5, wherein:
the step for forming the completed product includes a step of selecting a frame module from frame modules prepared in advance with plural variations as the other completed frame module.
